# EUROPÄISCHE PATENTSCHRIFT

(11) **EP 2 578 384 B1**
(45) Veröffentlichungstag und Bekanntmachung des Hinweises auf die Patenterteilung: **25.03.2015**
(21) Anmeldenummer: 12193003.6
(22) Anmeldetag: 15.04.2011
(51) Int. Cl.: B29C 70/54, B29C 70/38, B29B 11/16

(54) **Faserführungsvorrichtung und Verwendung derselben**
Fibre guiding device and use thereof
Dispositif de guidage de fibre et son utilisation

(30) Priorität: 16.04.2010 DE 102010015199
(43) Veröffentlichungstag der Anmeldung: 10.04.2013
(62) Teilanmeldung aus: 11715444.3
(73) Patentinhaber: Compositence GmbH, 71229 Leonberg (DE)
(72) Erfinder: Karb, Ingo, 71287 Weissach (DE); Kehrle, Rainer, 88630 Pfullendorf-Hilpensberg (DE); Witzel, Volker, 74369 Löchgau (DE)
(74) Vertreter: Kramer Barske Schmidtchen Patentanwälte PartG mbB

(56) Entgegenhaltungen:
- WO-A1-03/099545
- WO-A2-2008/056980
- DE-A1- 4 115 831
- GB-A- 2 452 298
- JP-A- 3 287 824

## Beschreibung

Die vorliegende Erfindung bezieht sich auf eine Faserrührungsvorrichtung und eine Verwendung einer Faserführungsvorrichtung und eine Vorrichtung zum Aufbau eines dreidimensionalen Vorformlings für ein Bauteil aus einem Faserverbundwerkstoff.

Faserverbundwerkstoffe werden aufgrund ihrer Materialeigenschaften häufig in Leichtbaukonstruktionen eingesetzt. Zur Herstellung von Bauteilen aus Faserverbundwerkstoffen existieren eine Vielzahl unterschiedlicher Fertigungsverfahren, die sich vor allem durch die dabei verarbeiteten Halbzeuge (vorgefertigte Rohmaterialformen), unterscheiden. Im Bereich der Faserverbundwerkstoffe wird allgemein zwischen mit Harz vorimprägnierten Halbzeugen, auch Prepreg, abgeleitet von "preimpregnated" bezeichnet, und trockenen Halbzeugen unterschieden. Das Ausgangsmaterial für beide Arten von Halbzeugen für Faserverbundwerkstoffe sind dabei sogenannte Rovings. Ein Roving ist ein Faden, der aus einer Mehrzahl von Filamenten aus dem Faserwerkstoff besteht, die man als die eigentlichen Fasern bezeichnen könnte. Für Faserverbundwerkstoffe werden bevorzugt Kohlenstofffasern, auch Karbonfasem genannt, Glasfasern, Aramidfasern, etc. verwendet. Ein solches Roving kann aus einigen wie z.B. 8 oder 10 Filamenten bis zu z.B. 50000 Filamenten oder mehr bestehen. In dieser Anmeldung bezeichnet der Begriff Faser ein Roving, außer wenn ausdrücklich auf einzelne Filamente Bezug genommen wird.

Die sogenannten Prepregs können auf unterschiedliche Art und Weise hergestellt werden. Zum Beispiel können trockene Faserhalbzeuge mit einem duromeren Harz, das bei Raumtemperatur eine hochviskose, klebrige Konsistenz aufweist, getränkt werden. Es existieren auch Faserhalbzeuge, die mit einer Harzmatrix aus thermoplastischem Kunststoff imprägniert sind. Beide Formen werden im Rahmen dieser Anmeldung als Prepregs bezeichnet.

Diese Halbzeuge können als meist parallele, unidirektionale Fasern, auch UD-Prepreg genannt, oder Gewebe, auch Gewebe-Prepreg genannt, vorliegen.

Auch bei den trockenen Halbzeugen gibt es im Stand der Technik verschiedene Formen. Eine wichtige Art von trockenen Halbzeugen sind neben Geweben die Gelege, die in der Regel als Multiaxialgelege (MAG) aus mehreren aufeinandergelegten Lagen von Fasern mit verschiedenen Orientierungen bestehen, die z.B. durch Vernähen oder mittels eines Binder genannten Klebstoffs zusammengehalten werden. Multiaxialgelege können unidirektional (UD), biaxial, z.B. in zwei Lagen, triaxial, z.B. in drei Lagen, quadriaxial, z.B. in vier Lagen, usw., d.h. mit entsprechender Anzahl verschieden orientierter Lagen, hergestellt werden. Weitere trockene Halbzeuge sind Gestricke, Geflechte, Gewirke, Schmalbandtextilien und Rovings. Die Rovings stellen das Ausgangsmaterial für alle Halbzeuge dar. Der Faserverbundwerkstoff für ein Faserverbundbauteil weist immer die beiden Komponenten Verstärkungsfaser und Matrix (Harz) auf. Die beiden Komponenten Verstärkungsfaser und Matrix (Harz) müssen in den Fertigungsvorgängen zusammengeführt werden.

Im Falle der Prepregs, d.h. der Halbzeuge mit duromeren und thermoplastischen Beschichtungen, Imprägnierungen, etc. liegen die Verstärkungsfaser und die Matrix in bereits gemischter Form vor. Bei den Prepregs wird die Matrix nach den formgebenden Herstellungsschritten, die zur gewünschten Bauteilgeometrie führen, unter Temperatur und/oder Druck in einem Autoklaven ausgehärtet.

Beim sogenannten Vorformen (Preforming) wird unter Verwendung von trockenen Halbzeugen ein Vorformling (Preform) in der gewünschten Bauteilgeometrie hergestellt. Die Imprägnierung mit z.B. dem duromeren Harz erfolgt danach mittels eines Injektionsverfahrens oder eines Infusionsverfahrens. Dabei wird das Harz mit Überdruck in das trockene Halbzeug in Bauteilgeometrie gepresst oder unter Verwendung von Unterdruck in das in Bauteilgeometrie befindliche Halbzeug infiltriert.

Es können also im Stand der Technik drei gängige Herstellungsverfahren für dreidimensionale Bauteile aus Faserverbundwerkstoffen unterschieden werden. Als erstes das Vorformen (Preforming), bei dem ein Bauteilvorformling (Preform) aus Gewebezuschnitten und/oder Multiaxialgelegezuschnitten lagenweise aufgebaut und anschließend in einer Form mit Harz imprägniert und ausgehärtet wird. Zweitens das Herstellen des Bauteils aus Prepreg-Zuschnitten, die lagenweise in einer Form abgelegt und anschließend ausgehärtet werden. Drittens, das Faserlegeverfahren, bei dem eine oder mehrere Fasern z.B. automatisiert auf einer Form abgelegt werden. Dabei können Prepreg-Fasern verwendet werden, wie es z.B. in der US 5,645,677 (entspricht EP 0 626 252 A) gezeigt ist. Bei dem Faserlegeverfahren ist es auch bekannt, trockene Rovings zu verwenden. Eine durchgehende Fixierung der Fasern auf der Form erfolgt dabei entweder mit Hilfe von Bindern oder die Fasern werden direkt vor der Ablage in dem Legekopf mit Harz imprägniert, wie es z.B. in der US 2009/0229760 A1 offenbart ist.

Aus der WO 2009/124724 A1 ist ein Verfahren zur Herstellung eines FVW/FVK-Bauteils aus Rovings mit einem Formwerkzeug und ein Formwerkzeug zur Durchführung des Verfahrens bekannt, bei dem ein Roving auf die Form-Oberfläche eines Formwerkzeugs durch Spannen des Rovings mittels einer Aufbringungs-Vorrichtung unter Zug zwischen UmlenkVorrichtungen in vorgegebenen Orientierungen aufgebracht wird. Aus der DE 30 03 666 A1 sind ein Gelege zur Herstellung einer Verstärkung von im wesentlichen aus Flächen bestehenden Bauteilen und eine Vorrichtung zur Herstellung desselben bekannt, bei dem ein Roving auf einer im wesentlichen plattenartig ausgebildeten Fläche abgelegt und über ein als Stift, Bolzen oder dergleichen ausgebildetes Fadenumlenkelement umgelenkt wird. Aus der EP 1 584 462 A2 ist ein Verfahren zum Herstellen eines Vorformlings für ein aus Verbundwerkstoff hergestelltes Strukturteil eines Flugzeugs bekannt, bei dem ein Roving auf einer zweidimensionalen Ebene abgelegt und zwischen Start und Endpunkt durch Nähen fixiert wird und die dreidimensionale Form eines Bauteils durch einen nachgeschalteten Umformschritt erhalten wird. Aus der DE 10 2008 019 147 A1 ist ein Verfahren zur Herstellung von Faservorformlingen für Verbundwerkstoffbauteile bekannt, bei dem trockene Faser-Rovings auf einer geometrischen Kontur abgelegt werden, wobei die trockenen Faser-Rovings in einem Verfahrensschritt vor dem Ablegen mit einem Bindemittel wie einem thermoplastischen Bindemittel versehen werden und durch Aktivieren des Bindemittels mit der Konturoberfläche bzw. bereits abgelegten Faser-Rovings verbunden werden. Nachfolgend werden die Faser-Rovings mittels einer Trenneinheit durchtrennt. Die DE 100 05 202 A1 offenbart die Herstellung von Verstärkungsstruktur-Halbzeugen für Faser-Verbundwerkstoffe, bei dem die Preforms ausgestanzt oder ausgeschnitten werden.

Alle diese Verfahren sind im Hinblick auf die Herstellung von dreidimensionalen Bauteilen aus Faserverbundwerkstoffen nicht befriedigend. Es gibt verschiedene Nachteile wie z.B. große Verschnittanteile der ursprünglichen Halbzeuge und/oder hohe Anteile an Handarbeit und/oder niedrige Produktionsgeschwindigkeiten bei Automatisierung und/oder Probleme mit der Materiallagerung und/oder Probleme bei der Imprägnierung mit der Matrix.

Es ist daher eine Aufgabe der Erfindung, eine verbesserte Technik zur Herstellung von dreidimensionalen Vorformlingen für Bauteile aus Faserverbundwerkstoffen anzugeben.

Diese Aufgabe wird gelöst durch eine Faserführungsvorrichtung nach Anspruch 1 bzw. eine Verwendung nach Anspruch 4 bzw. eine Vorrichtung nach Anspruch 5.

Weiterbildungen der Erfindung sind in den Unteransprüchen angegeben.

Weitere Merkmale und Zweckmäßigkeiten ergeben sind aus der Beschreibung von Ausführungsbeispielen anhand der Figuren. Von den Figuren zeigen:
- Fig. 1: eine perspektivische Ansicht eines Werkstückträgers und eines Roboters mit Legkopf;
- Fig. 2: in (a) eine Ansicht eines Werkstückträgers, und in (b), (c) und (d) mit abgelegten Faserlagen;
- Fig. 3: in (a) einen Werkstückträger mit darauf abgelegten Fasern ohne Zwischenfixierung, und in (b) und (c) einen Werkstückträger mit darauf abgelegten Fasern mit Zwischenfixierungsbereichen nach Ausführungsformen der Erfindung;
- Fig. 4: in Querschnittsansichten Ausführungsformen von Werkstückträgern mit Zwischenfixierungsbereichen, in (a) mit Ansaugzwischenfixierungsbereichen und in (b) mit Nadelzwischenfixierungsbereich;

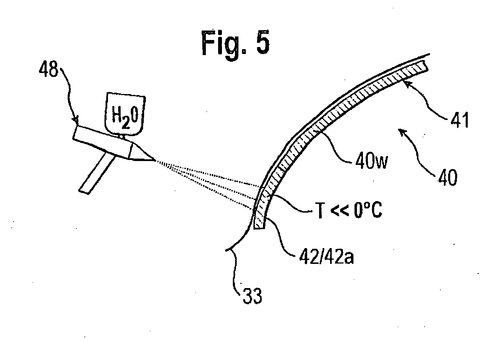

- Fig. 5: eine ausschnittsweise Querschnittsansicht einer Ausführungsform eines Werkstückträgers mit einem Vereisungsrandfixierungsbereich;
- Fig. 6: Ausführungsformen von Randfixierungsbereichen eines Werkstückträgers, in a) als Randfixierungsbereich mit mechanischen Klemmen (Kinematik der Klemmvorrichtung nicht gezeigt) und in b) als Hakenrandfixierungsbereich;
- Fig. 7: Ausführungsformen von Randfixierungsbereichen eines Werkstückträgers, in a) als Nadelrandfixierunesbereich und in b) als Hakenrandfixierungsbereich;
- Fig. 8: Querschnittsansichten des Ablegens, Randfixierens und Abschneidens von Fasern, in a) mit in dem Legekopf integrierten Klebestoffauftrag, und in b) mit externem Klebstoffaufrag für die Randfixierung;
- Fig. 9: Ausführungsformen von Faserschneidmechanismen;
- Fig. 10: schematische Ansichten verschiedener Ausführungsformen zur Realisierung der Relativbewegung von Legekopf und Werkstückträger;
- Fig. 11: eine schematische Ansicht zur Erläuterung der Faserzufuhr;
- Fig. 12: eine erste Ausführungsform einer modifizierten Energiekette für die Faserführung, in a) in einer Schnittansicht und in b) in einer teilweise aufgeschnittenen perspektivischen Ansicht;
- Fig. 13: eine zweite Ausführungsform einer modifizierten Energiekette für die Faserzuführung, in a) in einer Schnittansicht und in b) in einer teilweise aufgeschnittenen perspektivischen Ansicht;
- Fig. 14: schematische Darstellungen in Querschnittsansicht einer Ausführungsform einer Transfervorrichtung, die in und a) bis c) das Abnehmen des Vorformlings von dem Werkstückträger mittels der Transfervorrichtung zeigt;
- Fig. 15: schematische Darstellungen in Querschnittsansicht einer zweiten Ausführungsform einer Transfervorrichtung, die in a) bis d) das Abnehmen des Vorformlings von dem Werkstückträger mittels der Transfervorrichtung zeigt;
- Fig. 16: schematische Darstellungen in Querschnittsansicht einer dritten Ausführungsform einer Transfereinheit und a) bis d) den Ablauf des Abnehmens des Vorformlings von dem Werkstückträger mittels der Transfervorrichtung;

- Fig. 17: eine schematische Darstellung einer Vakuumstabilisierung eines Vorformlings und Einbringen von Harzfilmen nach einer Ausführungsform der Erfindung;
- Fig. 18: eine Ablaufdarstellung eines Herstellungsverfahrens nach einer Ausführungsform der Erfindung; und
- Fig. 19: eine schematische Darstellung einer Ausführungsform einer Technik zum Einbringen von Lücken in Rovings/Fasern einer Faserschar.

Zunächst werden einige allgemeine Erläuterungen zu den gelehrten Vorrichtungen und Verfahren gegeben, bevor spezifische Ausführungsformen beschrieben werden.

Mit den gelehrten Vorrichtungen und Verfahren ist es möglich, trockene Fasern (Rovings) in einer Faserschar auf einem Werkstückträger abzulegen. Die trockenen Fasern werden in einem dafür vorgesehenen Randbereich des Werkzeugträgers fixiert (Randfixierung) und, abhängig von der dreidimensionalen Geometrie des zu erstellenden Vorformlings, gegebenenfalls in bestimmten Zwischenfixierbereichen zwischenfixiert.

Dies führt dazu, dass zum Einen wesentlich kostengünstigere trockene Fasern für den Aufbau des dreidimensionalen Vorformlings verwendet werden können, und andererseits aufgrund des Ablegens der trockenen Fasern hohe Vorschubgeschwindigkeiten erzielt werden können.

Es werden verschiedene Vorrichtungen im Verfahren zur Randfixierung und zur Zwischenfixierung gelehrt, die abhängig von der dreidimensionalen Gestalt des aufzubauenden Vorformlings gewählt werden können.

Damit die Vorteile des Ablegens trockener Fasern in vorteilhafter Weise genutzt werden können, werden verschiedene weitere Lehren zum Zuführen, Fördern, Abschneiden der Fasern gegeben, die in Verbindung mit dem Ablegen von trockenen Fasern und/oder der Randfixierung und/oder der abschinittsweisen Zwischenfixierung ihre kombinatorische Wirkung entfalten. Dabei kann z.B. mit vergleichsweise geringem mechanischen oder regelungstechnischem Aufwand der Zug auf die trocken abgelegten Fasern während des Ablegevorcangs reduziert werden. Es wird ausdrücklich betont, dass die einzelnen offenbarten Komponenten, Einheiten, Verfahrensschritte sowohl in der Kombination als auch getrennt voneinander gelehrt werden, und zwar wohl zum Zwecke der Offenbarung als auch zum Zwecke der Offenbarung getrennt beanspruchbarer Erfindungen. Das bedeutet z.B.. dass die Offenbarung, die sich auf das verschleißfreie Schneiden der Fasern bezieht, sowohl in Kombination als auch einzeln und/oder getrennt von den übrigen Lehren wie die Faserführung über modifizierte Energieketten oder das trockene Ablegen der Fasern beansprucht werden kann.

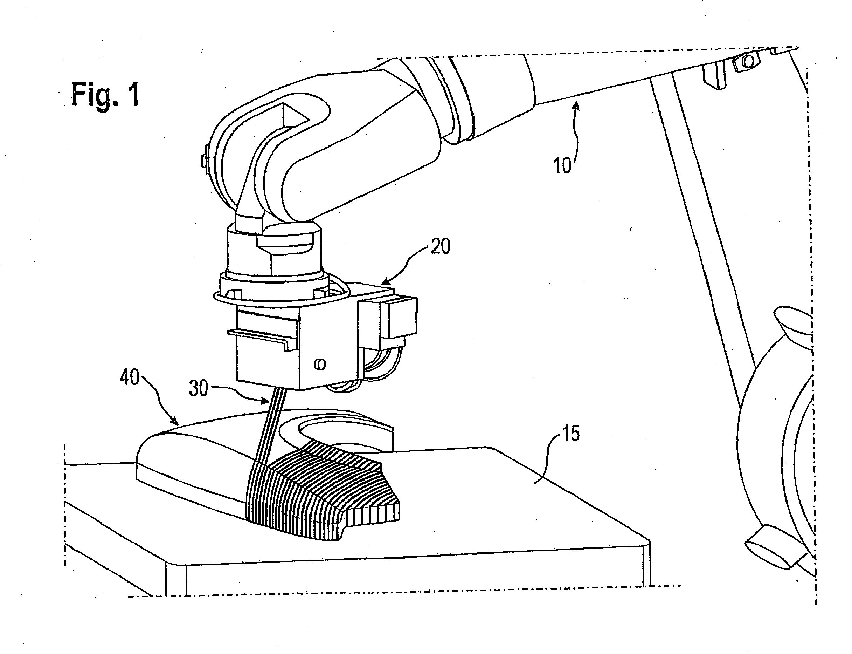

Fig. 1 zeigt einen Roboter 10, an dem ein Lesekopf 20 befestigt ist. Ein Werkstückträger 40 ist auf einer Halterung 15 für den Werkstückträger gehalten. In Fig. 1 ist schematisch gezeigt, dass der Legekopf 20 zum Ablegen einer Faserschar 30 auf den Werkstückträger 40 ausgebildet ist. In Fig. 1 sind lediglich vier Fasern in der Faserschar 30 gezeigt, die gleichzeitig abgelegt werden. Die Faserschar 30 kann eine Mehrzahl n von Fasern aufweisen, mit n = 2.3..., wobei momentan n = 8 oder n =16 oder n = 32 bevorzugt wird.

Die Anordnung dient zum Aufbau eines dreidimensionalen Vorformlings für ein Bauteil aus einem Faserverbundwerkstoff mit einer mehrlagigen, multiaxialen Faserarchitektur (MAFA) ähnlich einem Multiaxialgelege (MAG).

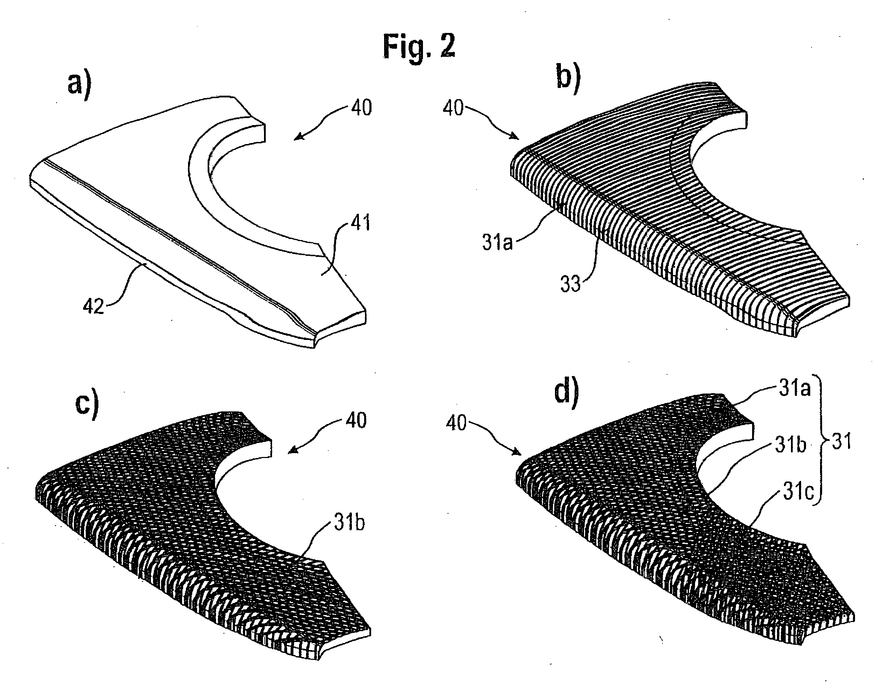

Wie in Fig. 2a) gezeigt ist, weist der Werkstückträger 40 dafür einen Werkstückformbereich 41 und einen Randfixierbereich 42 auf. Der Werkstückformbereich 41 entspricht der gewünschten dreidimensionalen Gestalt des Vorformlings. Der Randfixierbereich 42 dient zum Fixieren der trocken abgelegten Fasern 33 im Randbereich des Werkstückträgers 40, wie nachfolgend noch genauer erläutert wird.

In Fig. 2b) ist der Werkstückträger mit einer ersten Faserlage 31a, die auf dem Werkstückträger 40 in einer ersten Orientierung (= axialen Ausrichtung) abgelegt worden ist, gezeigt. Wie in Fig. 2b) angedeutet ist, besteht die Faserlage 31a aus Fasern (Rovings) 33, die in dieser axialen Richtung abgelegt wurden. In Fig. 2c) ist derselbe Werkstückträger 40 gezeigt, auf dem eine zweite Faserlage 32b über der ersten Faserlage 31a abgelegt wurde. Die Fasern der zweiten Faserlage 31b haben eine Orientierung von -45° relativ zur Orientierung der ersten Faserlage 31a. In Fig. 2d) ist gezeigt, wie eine dritte Faserlage 31c über der zweiten Faserlage 31b abgelegt ist, wobei diese nur auf einem Teil des Werkstückträgers 40 abgelegt wurde. Die dritte Lage 31c hat eine Orientierung von +45° relativ zur ersten Lage 31a und somit von 90° relativ zur zweiten Lage 31b. Die drei Lagen 31a bis 31c bilden eine mehrlagige, multiaxiale Faserarchitektur (MAFA) 31.

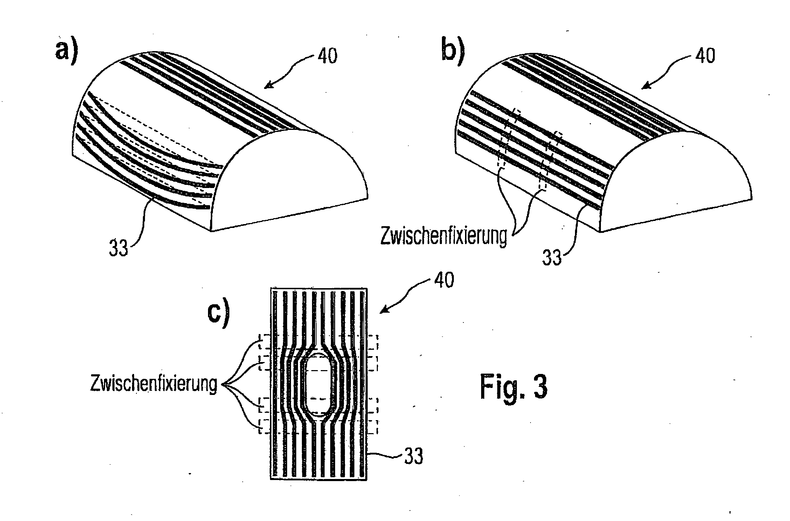

Wie bereits erläutert wurde, werden die Fasern 33 trocken auf dem Werkstückträger 40 abgelegt. Bei dem in Fig. 2 gezeigten Werkstückträger ergibt sich, dass dieses zu Schwierigkeiten an der hochstehenden Rundung führen könnte. Etwas Ähnliches könnte sich bei einer Situation ergeben, wie sie in Fig. 3a gezeigt ist. Dort ist ein Werkstückträger 40 gezeigt, dessen Gestalt im Wesentlichen einem in Axialrichtung mittig durchgeschnittenen Kreiszylinder entspricht. Beim Ablegen von trockenen Fasern, die ausschließlich im Randbereich an dem Werkstückträger 40 fixiert würden, könnte es zum Abrutschen von Fasern kommen, wie es in Fig. 3a) gezeigt ist.

Darum wird an solchen kritischen Stellen eine Zwischenfixierung der trocken abgelegten Fasern vorgenommen. Ein Beispiel für eine solche Zwischenfixierung ist schematisch in Fig. 3b) gezeigt. In Fig. 3c) ist in einer Draufsicht ein Werkstückträger gezeigt, der wie der in Fig. 3a) gezeigte Werkstückträger geformt ist, aber an seiner Oberseite einen hochstehenden Vorsprung aufweist, um den die Fasern 33 herumzulegen sind. Wie sich aus Fig. 3c) ohne Weiteres ergibt, sollte in diesem Bereich eine Zwischenfixierung der trocken abgelegten Fasern vorgenommen werden.

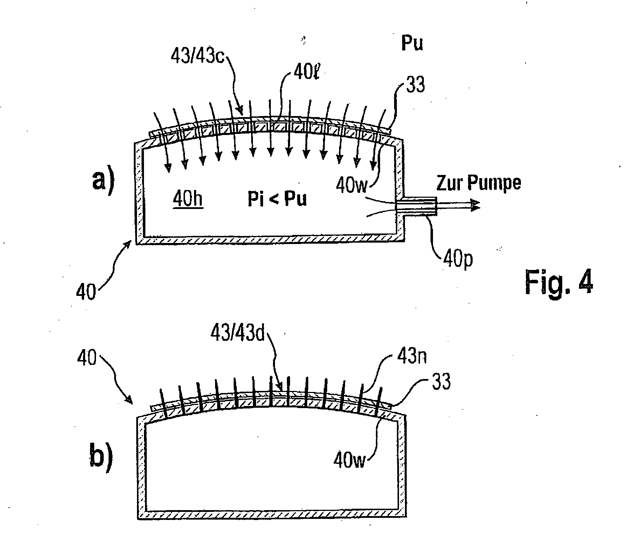

In Fig. 4 sind erste Ausführungsformen für das Vorsehen solcher Zwischenfixierungsbereiche gezeigt. In Fig. 4) ist schematisch eine Querschnittsansicht eines Werkstückträgers 40 gezeigt, der einen hohlen Innenraum 40h aufweist. Der hohle Innenraum 40h ist über einen Pumpanschluss 40p mit einer Pumpe verbindbar. In der Wand 40w, auf der die Fasem 33 abzulegen sind, sind Durchgangslöcher 401 ausgebildet. Der Innenraum 40h wird auf einem Druck pi, der kleiner als der Umgebungsdruck pu ist, durch Anschluss einer entsprechenden Pumpe gehalten. Dadurch entsteht an der Außenseite der Wand 40w ein Unterdruck bzw. eine Ansaugwirkung, so dass die abgelegten Fasern 33 in diesem Randfixierbereich, der als ein Unterdruck-/Ansaugbereich 43c ausgebildet ist, zwischenfixiert werden. In Fig. 4b) ist eine andere Ausführungsform eines Zwischenfixierbereichs 43 gezeigt, der als Nadelbereich 43d ausgebildet ist. In diesem Nadelbereich stehen an der Außenseite der Wand 40w Nadeln 43n vor, mittels derer die Fasern 33 zwischenfixiert werden.

Andere Ausbildungen von Zwischenfixierbereichen, z.B. als Bereiche zum Auftrag eines Klebers oder zum Vorsehen von Haken oder zum Anfrieren der Fasern sind ebenfalls möglich.

Entsprechende Fixiemöglichkeiten sind auch für den Randfixierbereich 42 vorgesehen. In Fig, 5 ist eine teilweise Querschnittsansicht einer Wand 40w eines Werkstückträgers 40 gezeigt. Anschließend an den Werkstückormbereich 41 ist der Randfixierbereich 42 ausgebildet. Dieser wird auf einer Temperatur, die wesentlich niedriger als der Gefrierpunkt eines Fixiermediums (z.B. Wasser) ist, gehalten. Wesentlich niedriger bedeutet hier Temperaturunterschiede von 10K und mehr, im Falle von Wasser ca. 30K. Die Kühlung des Fixierbereichs kann beispielsweise durch den Durchfluss eines kalten flüssigen Kühlmediums durch Kühlkanäle im Fixierbereich passieren. Hier kommen die üblichen in hälteanlagen gleichen Temperaturbereichs verwendeten Kälte- und Kühlmittel in Frage.

Mittels einer Sprühdüse 48 wird das verflüssigte, niedrigviskose Fixiermedium an die Stelle, an der die Fasern 33 im Randfixierbereich 42 zu fixieren sind, gesprüht. Durch die große Temperaturdifferenz friert das Fixiermedium augenblicklich und dadurch wird die zu fixierende Faser 33 an dem Vereisunssbereich 43b angefroren. Diese Fixiermethode ist selbstverständlich auch, wie zuvor bereits beschrieben wurde, zur Zwischenfixierung anwendbar. Fixiermiedien, welche nicht bei Raumtemperatur niedrigviskos sind, müssen heiß zur Sprühdüse gefördert werden.

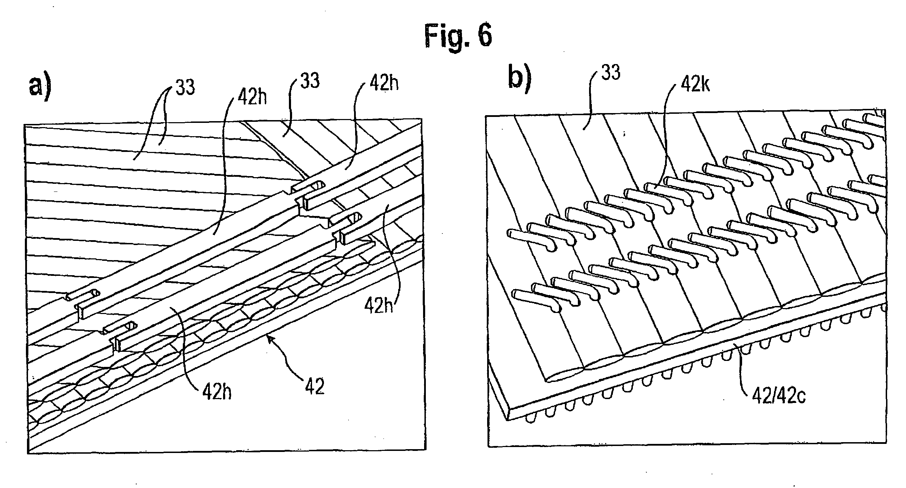

In Fig. 6a) ist eine Randfixierung von Fasern 33 mittels eines mechanischen Klemmens gezeigt. In dem Randfixierbereich 42 sind dabei Halteelemente 42h vorgesehen, die eine Klemmkraft senkrecht zum Randfixierbereich aufbringen und so die Fasern 33 einklemmen. Die Klemmkraft kann dabei durch eine pneumatisch, elektrisch oder hydraulisch angetriebene Kinematik oder z.B. auch durch Verwendung von magnetischen Klemmelementen, die an den Randfixierbereich 42 angezogen werden aufgebracht werden.

Bei der Verwendung von magnetischen Klemmelementen werden diese durch eine entweder am Legekopf, am Werkstückträger oder an einem weiteren Manipulator (z.B. Roboter) vor dem Aufbringen der Fadenschar entfernt und nach dem die Fadenschar im Klemmbereich platziert ist wieder aufgesetzt. Alternativ könnten z.B. ansteuerbare Elektromagneten in dem Randbereich vorgesehen sein.

Bei dem in Fig. 6a) gezeigten mechanischen Klemmsystem werden dabei zwei, in einem Abstand längs des Randfixierbereich 42 im Wesentlichen parallel zueinander verlaufende Reihen von Halteelementen 42h verwendet.

In Fig. 6b) ist eine alternative Ausführungsform eines mechanischen Klemmsystems für den Randfixierbereich gezeigt. Dabei werden zwei Reihen von Klemmhaken 42k verwendet. Die Klemmhaken können, was nicht gezeigt ist, aus der Ebene des Randfixierbereichs heraus nach oben verschoben und dabei gedreht werden, so dass die Fasern 33 trocken abgelegt und dann durch Verdrehen und Herunterziehen der Haken 42k festgeklemmt werden. Der festgeklemmte Zustand ist in Fig. 6d gezeigt.

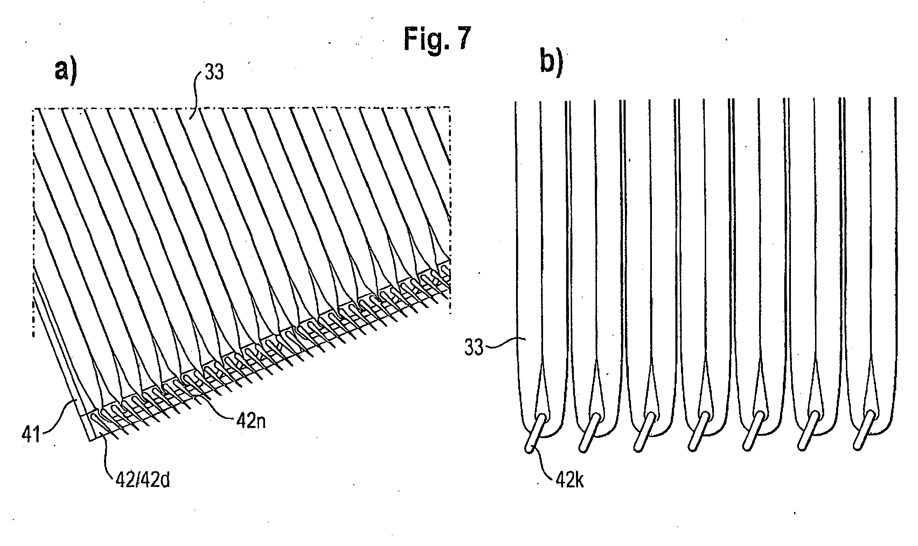

In Fig. 7a ist eine Ausführungsform des Randfixierbereichs 42 gezeigt, bei dem Nadeln 42n aus dem Randfixierbereich 42 vorstehen. In Fig. 7b) ist wiederum eine Ausführungsform gezeigt, bei der Haken 42k zur Randfixierung verwendet werden.

In Fig. 6 wird die Verwendung des Randfixierbereiches derart, dass die Fasern 33 nach der Randfixierung abgeschnitten werden, gezeigt. In Fig. 7 ist dagegen die Verwendung der Ausführungsformen der Randfixierbereiche derart gezeigt, dass die Fasern nach der Randfixierung nicht abgeschnitten sondern das Faserscharlegemuster an dieser Stelle ohne Abschneiden der Fasern fortgesetzt wird.

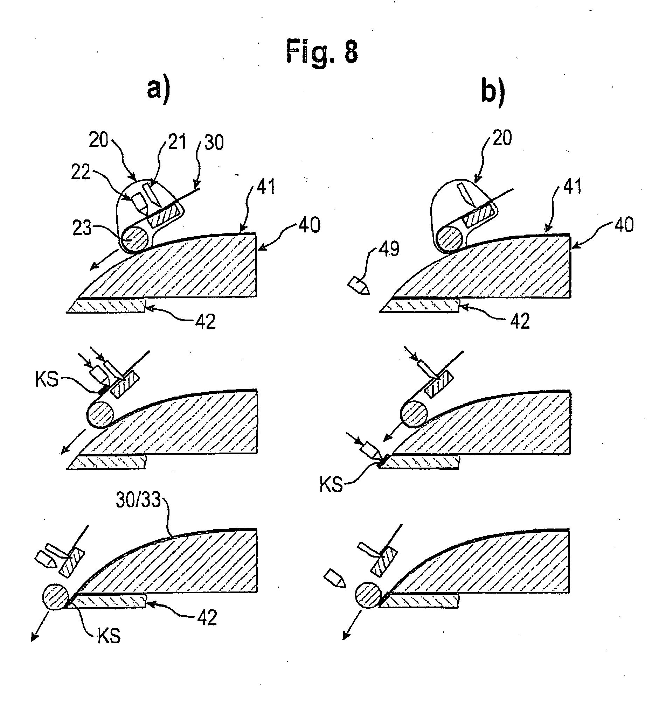

In Fig. 8 ist schematisch gezeigt, wie unter Verwendung des Werkstückträgers 40 und des Legekopfs 20 eine Randfixierung mittels Klebstoff KS in dem Randfixierbereich 42 erhalten wird. In Fig. 8a) ist von oben nach unten der Ablauf mit einem Legekopf 20 mit integrierter Klebstoffdüse 22 gezeigt. Die von rechts oben in den Legekopf 20 zugeführte Faserschar 30 wird über eine Anpress-/Umlenkwalze 22 auf den Werkstückträger 40 abgelegt. Dabei werden die trockenen Fasern 33 der Faserschar 33 zunächst auf dem Werkstückformbereich 41 abgelegt. Der Lesekopf 20 weist einen integrierten Schneidmechanismus 21 auf, mit dem die Fasern 33 der Faserschar 30 abgeschnitten werden können. Details solcher Schneidmechanismen werden später erläutert.

In Fig. 8a ist in der zweiten Ansicht eine Stellung schematisch gezeigt, in der die Länge der Faser von dem aktuellen Ablagepunkt auf dem Werkstückträger 40 bis zu dem Schneidmechanismus der noch verbleibenden Ablegelänge bis zum Ende des Randfixierbereichs 42 entspricht. In dieser Stellung werden zunächst durch Betätigen des Schneidmechanismus 21 die Fasern 33 der Faserschar 30 abgeschnitten, wie durch den Pfeil schematisch angezeigt ist. Auf das entsprechende Ende der Faser wird durch die integrierte Klebstoffdüse 22 Klebstoff KS in einer entsprechenden Länge aufgetragen, so dass nach dem Weiterfahren des Legekopfs 20 in die Stellung, die in Fig. 8a), unten gezeigt ist, die abgeschnittenen Fasern 33 der Fasemschar 30 durch den nur abschnittsweise aufgetragenen Klebstoff KS in dem Randfixierbereich 42 fixiert werden.

In Fig. 8b) ist im Wesentlichen derselbe Ablauf für eine Ausführungsform gezeigt, bei der die Klebstoffdüse 6 als externe Klebstoffdüse 49 anstelle der internen Klebstoffdüse 22 vorgesehen ist. Dabei wird der Klebstoff nicht auf die Fasern 33 der Faserschar 30 sondern auf den entsprechenden Abschnitt des Randfixierbereichs 42 aufgebracht.

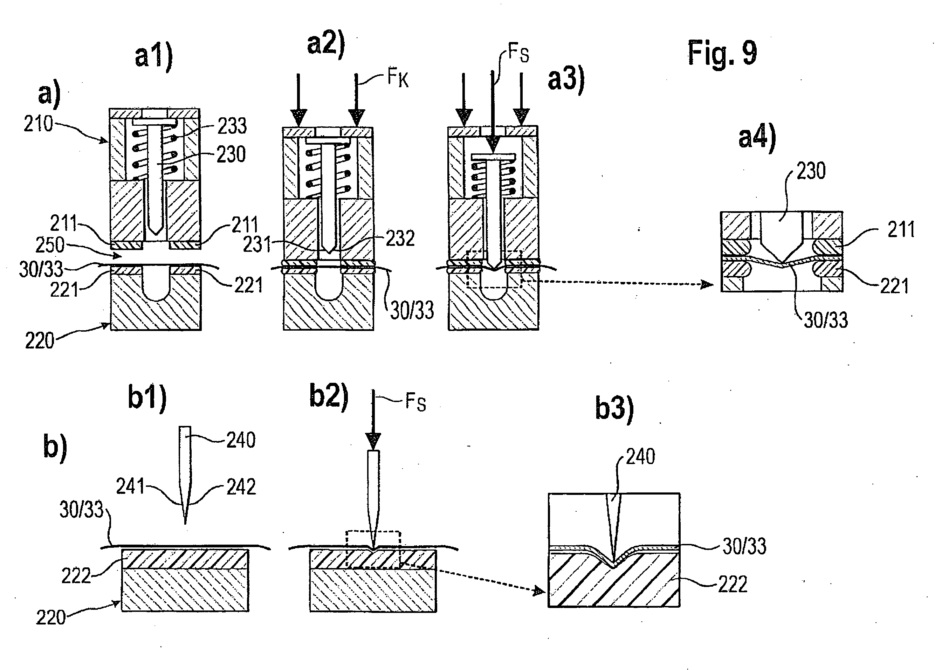

In Fig. 9 ist in a) eine erste Ausführungsform eines Schneidmechanismus 21 für den Legekopf 20 gezeigt. Der Schneidmechanismus 21 weist einen Drücker 210 und ein Widerlager 220 auf. In einer Durchlassposition sind der Drücker 210 und das Widerlager 220 voneinander beabstandet. In dieser Position ist zwischen dem Drücker 210 und dem Wiederlager 220 ein Faserkanal oder Faserdurchgang 250 ausgebildet. Durch diesen Faserdurchgang 250 können die Fasern 33 in einer Faservorschubrichtung V während des Ablegevorgangs (siehe Fig. 8) hindurchgefördert werden. Der Drücker 210 ist senkrecht zu der Faservorschubrichtung relativ zu dem Widerlager 220 bewegbar, wie sich aus dem Vergleich der Ansichten a1) und a2) ergibt. An den den Faserdurchgang 250 begrenzenden Seiten weisen der Drücker 210 und das Widerlager 220 Klemmbacken 211, 221 auf. In dem Drücker 210 ist ein Schneidmesser 230 derart vorgesehen, dass es senkrecht zu der Faservorschubrichtung V bewegbar ist. Das Schneidmesser 230 ist durch eine Feder 233 in Richtung von den Fasern 33 weg vorgespannt. Zum Schneiden einer Faser 33 wird der Drücker 210 in Richtung des Widerlagers 22 durch ein nicht gezeigtes Stellglied bewegt und mit einer Klemmkraft F_{K} gegen das Widerlager gedrückt und mit dieser Klemmkraft wird die zu zerschneidende Faser 33 zwischen den Klemmbacken 211, 221 geklemmt. Dieser Zustand ist in Ansicht a2) gezeigt. Dann wird das Schneidmesser 230 gegen die Vorspannkraft der Feder 233 durch ein Stellglied mit einer Schneidkraft Fs gegen die zu schneidende Faser 33 gedrückt und die zwischen den Klemmbacken 211, 221 eingeklemmte Faser wird zerschnitten bzw. gebrochen. Bei der gezeigten Ausführungsform weist das Schneidmesser 230 Flanken 231, 233 der Schneide auf, die in einem Winkel von ca. 90° zueinander stehen. Das bedeutet, der Klingenwinkel beträgt 90° (den bevorzugten Wert aus einem Bereich von 45 bis 120°). Der Schneidvorgang einer Faser 30 und einer solch "stumpfen" Klinge wird Streckbrechen genannt. Dabei wird die Faser unter hoher Zugspannung über eine Kante, d.h. die Klinge, gebogen. Durch die Kombination aus Zugbeanspruchung und Biegebeanspruchung und die Sprödheit des Werkstoffes der Faser kommt es zum Bruch der Faser. Dieses Schneidverfahren ist nur für spröde Fasern wie Kohlenstofffasern oder Glasfasern geeignet. Der Vorteil des großen Klingenwinkels liegt darin, dass die Schneidkante/Brechkante dadurch sehr robust ist und der Verschleiß außerordentlich gering ist. Es wird keine Relativbewegung zwischen Klinge und Fasern benötigt. Und es wird keine Gegenfläche zum Schneiden benötigt, die die Brechkante beschädigen könnte.

Der eigentliche Vorgang des Streckbrechens ist in Ansicht a4) vergrößert gezeichnet, wie durch den gestrichelten Rahmen in Ansicht a3) angedeutet ist.

Es ist offensichtlich, dass durch das Einklemmen der Faser zwischen den Klemmbacken 211, 221 sowohl das Streckbrechen ermöglicht als auch die Übertragung einer Zugspannung auf die Fasern 33 einer Faserschar verhindert wird.

Das in Fig. 9a) schematisch gezeichnete Prinzip eines Schneidmechanismus 21 zum Streckbrechen ist in verschiedenen Ausführungen verwirklichbar. Bereits genannt wurden separate Antriebe für Drücker 210 und Schneidmesser 230, die mechanische oder hydraulische oder pneumatische Antriebe oder Kombinationen von pneumatischen, hydraulischen und mechanischen Antrieben der beiden Elemente sein können. Alternativ könnte der Drücker 210 ortsfest sein und das Widerlager 220 in Richtung des Drückers 210 bewegt werden. Alternativ ist es auch möglich, nur den Drücker 210 oder das Schneidmesser 230 zur Bewegung zu beschleunigen und das jeweils andere Element federnd daran zu lagern. Beispielsweise kann der Drücker 210 pneumatisch beschleunigt werden, und das Schneidmesser 230 ist federnd in dem Drücker 210 gelagert. Bei einer entsprechenden Abstimmung von Masse des Schneidmessers 230 und Federkraft der Feder 233 wird beim Auftreffen des Drückers 210 auf das Widerlager 220 das Schneidmesser durch seine Trägheit gegen die Federkraft der Feder 233 bewegt. Unter Verwendung dieses Prinzips ist es auch möglich, das Schneidmesser 230 zu bewegen und eine entsprechend starke Feder 233 vorzusehen, die dann zur Mitnahme des Drückers 210 führt. Wenn der Drücker 210 dann in Kontakt mit dem Widerlager 220 gekommen ist, wird das Schneidmesser 230 weiter gegen die Kraft der Feder 233 zum Streckbrechen bewegt.

In Fig. 9b) ist eine andere Ausführungsform des Schneidmechanismus 21 gezeigt, mit dem das Prinzip des Biegebrechens verwirklicht wird. Dabei wird mit einer schärferen Klinge des Schneidmessers, also einem deutlich kleinerem Schneidwinkel als beim Biegebrechen, die Faser gegen eine elastische Unterlage 222, die auf dem Widerlager 220 aufgebracht ist, gedrückt. Dabei wird die Unterlage durch den Eindruck der Klinge um die Klinge herum geformt. Die zwischen Klinge und Unterlage befindlichen Fasern werden um den geringen Schneidenradius der Klinge gebogen. Durch die Sprödheit der Fasern brechen diese schon bei geringen Andruckkräften von Klinge zu Unterlage. Klinge und Unterlage verschleißen nicht oder nur geringfügig, wenn die Scheidkraft auf das gerade notwendige Maß begrenzt wird, da auch hier keine Relativbewegung zwischen Klinge, Unterlage und zu schneidenden Fasern auftritt, durch die abrasiver Verschleiß auftreten kann Das Schneidmesser 240 kann dabei wiederum pneumatisch, hydraulisch, mechanisch etc. bewegt werden.

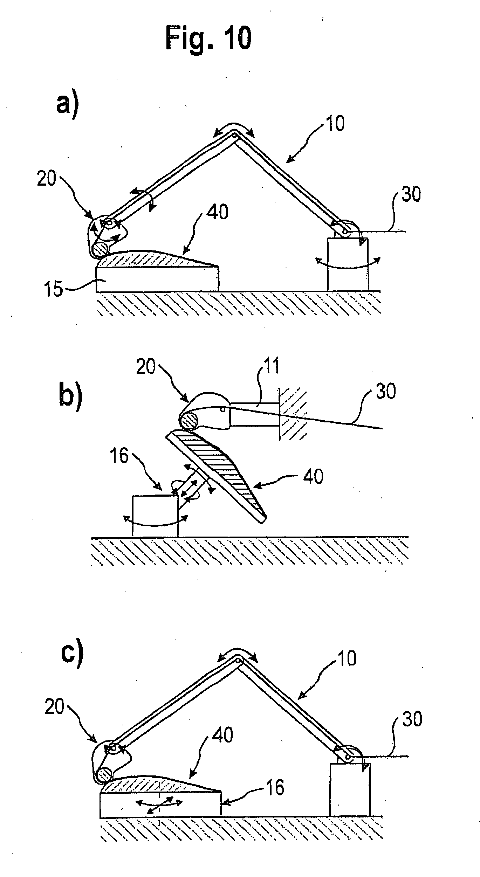

Fig. 10 zeigt verschiedene Möglichkeiten der Erzeugung der Relativbewegung von Legekopf 20 und Werkstückträger 40. Bei der in Fig. 10a) gezeigten Ausfübrungsform ist der Werkstückträger 40 auf einer feststehenden Halterung 15 für den Werkstückträger gehalten. Der Roboter 10 bewegt den Legekopf 20 während der Ablage der Faserschar.

Umgekehrt könnte ein Manipulator 16 für den Werkstückträger 40 vorgesehen sein (Fig. 10b)), der den Werkstückträger relativ zu dem Legekopf 20, der an einem Legekopfhalter 11 gehalten wird, bewegt. Natürlich ist auch eine Kombination mit Roboter 10 und Manipulator 16, wie es in Fig. 10c) gezeigt ist, möglich.

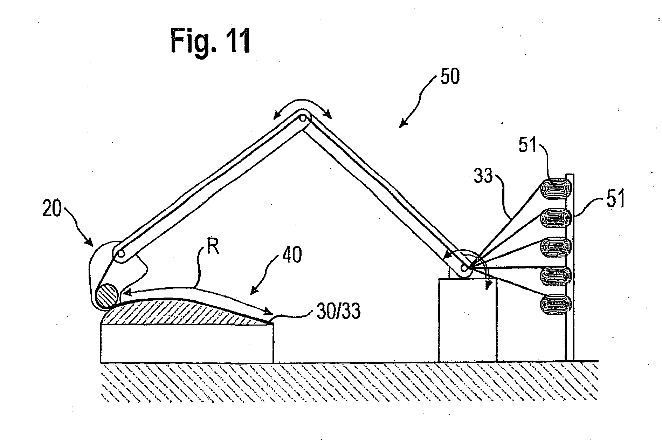

In Fig. 11 ist schematisch gezeigt, wie die Fasern 33 für die Faserschar 30 während des Ablagevorgangs zugeführt werden. Die Fasern (Rovings) 33 sind auf Spulen 51 eines Faserzuführungsmechanismus 50 aufgewickelt und werden von dort über noch näher zu beschreibende Teile des Faserzuführungsmechanismus 50 dem Legekopf 20 zugeführt. Während der Relativbewegung R des Legekopfs 20 und des Werkstückträgers 40, können dabei unterscliedlichste Zuführseschwindiskeiten und Zugkräfte in den Fasern 33 auftreten. Durch die Anordnung der Umlenkstellen des Faserzuführungsmechanismus an den Gelenken des Manipulatorsystems ist es möglich, die Wegstrecke der Faserschar von der Spule bis zum Legekopf konstant zu halten. Dadurch wird eine Lockerung und damit verbundenes Durchhängen der Faserschar bei Verfahrbewegungen des Manipulatorsystems vermieden.

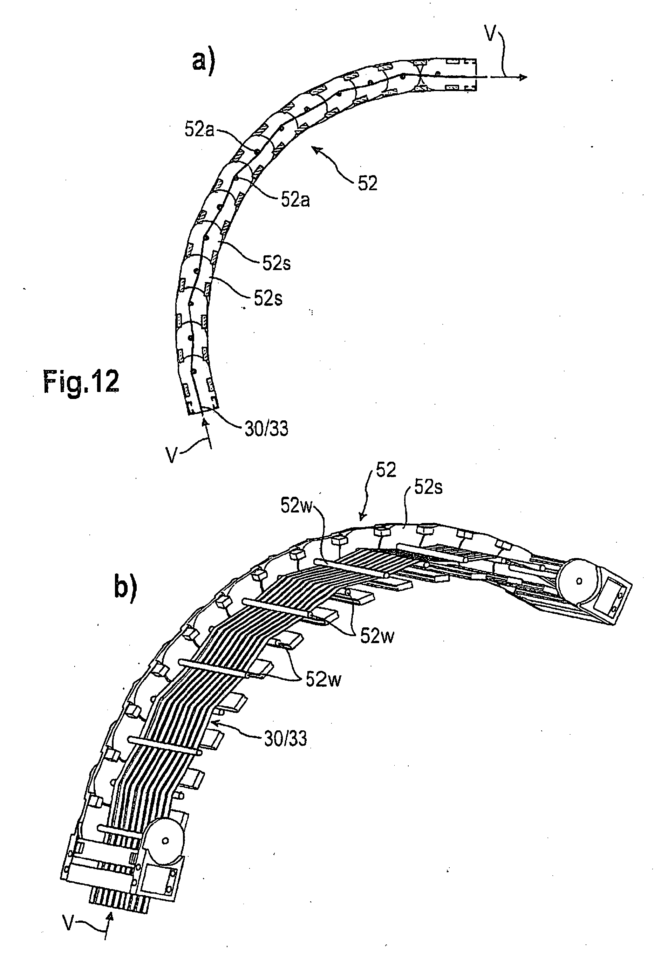

Fig. 12 zeigt eine erste Ausführungsform eines Faserführungsmechanismus 52 eines Faserzuführungsmechanismus 50. Der Faserführungsmechanismus 52 ist in Form einer modifizierten Energiekette implementiert, die eine Form einer Faserführungskette darstellt. Energiekette sind im Maschinenbau bekannt, um flexible Kabel oder pneumatische oder hydraulische Leitungen, die an einem Maschinenteil angeschlossen sind, das dauernd bewegt wird, zu führen.

Für die Faserführung der Faserschar wird eine aus mehreren gegeneinander schwenkbaren Segmenten bestehende Faserführungskette verwendet, die z.B. durch Modifikation einer Energiekette hergestellt werden kann. Die Energiekette wird in der Art modifiziert, dass drehend gelagerte Wellen die Fasern führen, wie in Fig. 12 gezeigt ist.

Eine solche Faserführungskette 52 weist Kettensegmente 52s auf. Benachbarte Kettensegmente 52s können sich relativ zueinander drehend um eine Achse 52a bewegen. Das bedeutet, dass der Abstand zweier benachbarter Achsen 52a konstant bleibt. Bei der modifizierten Energiekette sind auf jede Achse 52a drehend gelagerte Wellen 52w gesetzt. Das bedeutet, die drehend gelagerten Wellen 52w erstrecken sich längs der axialen Richtung der Achsen 52a. In einer seitlichen Ansicht, wie sie in Fig. 12a) gezeigt ist, sind dabei die Fasern 33 in Faservorschubrichtung V immer abwechselnd links und rechts an den Wellen 52w vorbeigeführt. In Draufsicht auf die Faserschar 33 bedeutet das, dass die Faserschar 33 in Faservorschubrichtung V abwechselnd unter und über den Wellen 52w geführt ist.

Daraus folgt, dass der Abstand der benachbarten Wellen 52w bei einer Biegung der Faserführungskette 52 konstant bleibt, dass durch eine Bewegung der Faserführungskette im Wesentlichen keine Zugkraft auf die geführten Fasern 33 bzw. die Faserschar 30 aufgebracht wird. Durch die Führung über drehbar gelagerte Wellen entfallen die z.B. bei der Führung durch Schläuche auftretenden Reibkräfte. Dadurch wird eine geringere Kraft zum Abziehen der Rovingschar benötigt und die Fasern werden ohne Beschädigung geführt.

Durch die Verwendung von Faserführungsketten, die auch eine Torsion um die Längsachse der Kette zulassen, können Fasern auch dreidimensional im Raum geführt werden. Neben der Führung von einzelnen oder einer Mehrzahl von Fasern ermöglicht diese Ausführungsform einer Faserführungskette auch die Führung von bandartigen, textilen Verstärkungen wie beispklsweise Schmalbandtextilien und Gewebebändem.

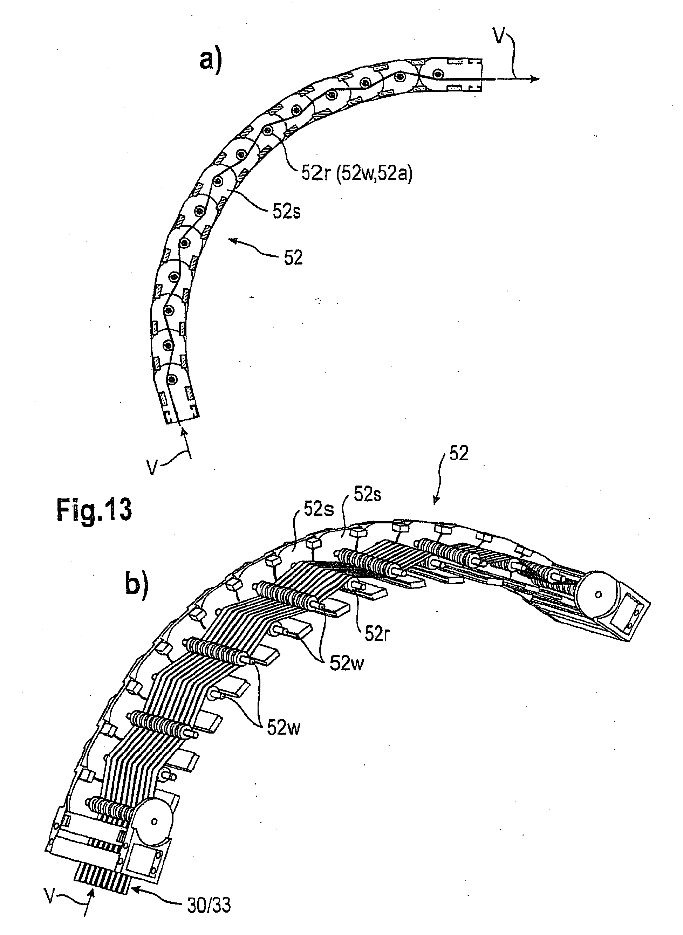

Fig. 13 zeigt eine zweite Ausführungsform einer Faserführungskette. Die zweite Ausführungsform unterscheidet sich von der ersten Ausführungsform dadurch, dass auf den Wellen 52w jeweils separat drehbar gelagerte Rollen 53r für die Fasern (Rovings) 33 vorgesehen sind. Durch diese Anordnung ist es möglich, jede Faser mit individueller Geschwindigkeit durch die Faserführungskette zu fördern.

Der Lesekopf 20 weist eine nicht gezeigte Faserfördervorrichtung auf. Die Faserförderung kann z.B. mit einer Fördereinheit, wie sie in der US 2009/0229760 A1 beschrieben ist, verwirklicht werden.

Grundsätzlich ist eine Faserförderung nach dem Eytelwein-Prinzip bekannt. In Näh- und Strickanlagen für Faserverbundwerkstoffe wird dieses Eytelwein-Prinzip auch seit längerem eingesetzt. Der Faserfördermechanismus dient zur Kompensation der Faserkräfte, die durch Reibung in der Faserführung bzw. der Faserzuführung entstehen. Bei einem solchen Fördermechanismus nach dem Eytelwein-Prinzip laufen die Fasern über zwei Reihen von Rollen, die parallel zueinander und versetzt angeordnet sind. Solange die Rovings im Wesentlichen spannungsfrei sind, drehen sich die Rollen unter den Rovings, ohne diese zu fördern, d.h. mit Schlupf. Wenn an den Rovings Zugkräfte anliegen, die z.B. an den Umlenkrollen entstehen und Ähnliches, werden die Fasern durch die rotierenden Rollen gefördert.

In dem Legekopf kann optional eine Vorrichtung zur Aufbereitung der Fasern (Rovings) vorgesehen sein. In dieser Faseraufbereitungsvorrichtung (nicht gezeigt) können die Fasern durch Spreizen auf eine definierte Breite gebracht werden (Aufbereitung). Weiterhin können alle Fasern zu einem einheitlichen, homogenen Band definierter Breite zusammengeführt werden (Homogenisierung). Das Ziel ist dabei, dass keine Lücken zwischen den Fasern der Faserschar und auch keine Überlappungen zwischen den Fasern der Faserschar auftreten. Selbstverständlich könnten umgekehrt auch gezielt Lücken oder Überlappungen hergestellt werden. Durch die Faseraufbereitungsvorrichtung kann die Breite der Faserschar am Ausgang des Lesekopfs variiert werden und es wird eine Variierung des Flächengewichts der Faserschar möglich.

Die Faseraufbereitung kann dabei durch Rollen, Walzen, Dorne und Ähnliches geschehen. Es ist also eine Faseraufbereitungsvorrichtung vorgesehen, die die Fasern der Faserschar auf eine definierte Weite bringen und/oder die Abstände der Faser der Faserschar variieren kann.

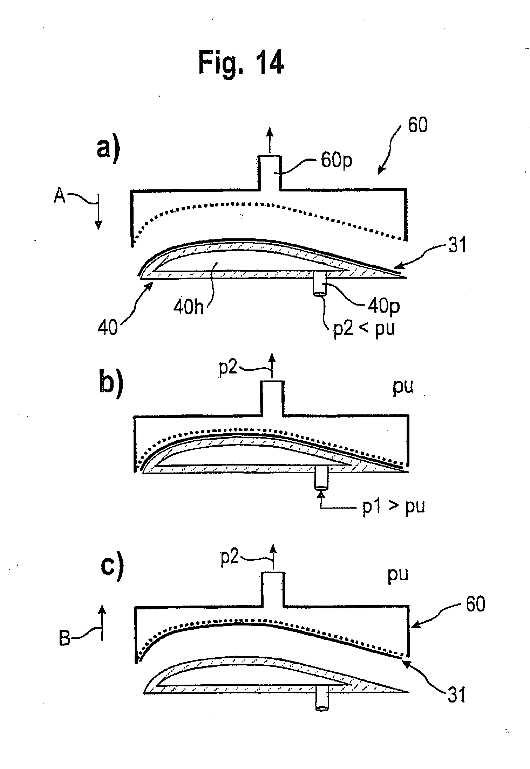

In Fig. 14 ist schematisch der Ablauf der Übertragung eines aufgebauten Vorformlings von den Werkstückträgern in den nachfolgenden Bearbeitungsschritt gezeigt. Der Werkstückträger 40 ist bei der gezeigten Ausführungsform mit einem hohlen Innenraum 40h ausgebildet, und der Innenraum 40h kann über einen Anschluss 40p mit einer Pumpe oder Druckquelle verbunden werden. Der Vorformling (Preform) 31 in Form eines MAFA ist durch Ablegen mehrerer Faserscharen nach einem Faserlegemuster aufgebaut worden.

Bei der in Fig. 14 gezeigten Ausführungsform sind z.B. Zwischenfixierbereiche 43, die mittels Unterdruck p2 arbeiten, vorgesehen.

Die Transfervorrichtung 60, deren Gestalt an der Unterseite der äußeren Form des Vorformlings 31 entspricht, wird in Richtung des Pfeiles A auf den Werkstückträger 14 abgesenkt. Im abgesenkten Zustand, der in Fig. 14b) gezeigt ist, wird an den Anschluss 40p des Werkstückträgers 40 ein Druck p1 angelegt, der gleich oder größer als der Umgebungsdruck pu ist, während an einem Druckanschluss 60p der Transfereinheit 60 ein Unterdruck p2, der kleiner als der Umgebungsdruck pu ist, angelegt wird. Dadurch wird der Vorformling 31 an der Transfereinheit 60 angesaugt, während die Ansaugwirkung an dem Werkstückträger 40, die zur Zwischenfixierung und/oder Randfixierung diente, aufgehoben wird. Der Vorformling 31 kann dann unter Aufrechterhaltung des Unterdrucks p2 von dem Werkstückträger abgehoben werden, wie in Fig. 14c) gezeigt ist (Bewegung der Transfervorrichtung 60 in Richtung des Pfeiles B).

Wie in Fig. 14 zu sehen ist, nimmt die Transfervorrichtung 60, also den fertig gelegten Vorformling 21 vom Werkstückträger 40 ab und transferiert (überträgt) denselben z.B. in eine Form zum Injizieren von Harz und zum Aushärten. Alternativ kann der Vorformling auch zu einer Zwischenlagerung oder in eine andere Bearbeitungsstation gebracht werden.

Das "Greifen" des fertig gelegten Vorformlings 31 kann nicht nur durch Unterdruck sondern auch mechanisch. z.B. durch Klemmen, Nadeln, elektrostatische oder magnetische Halter, etc. oder durch Frieren oder Kleben, wie es zuvor bereits beschrieben wurde, erfolgen.

Die Transfervorrichtung gibt auch die Möglichkeit zum Drapieren des Vorformlings, wie nachfolgend beschrieben wird. Die Transfervorrichtung gibt auch die Möglichkeit, den fertiggelegten Vorformling zwischen zwei Lagen von Harzfilmen oder Folien zu verpacken und/oder einer Formfixierung vorzunehmen.

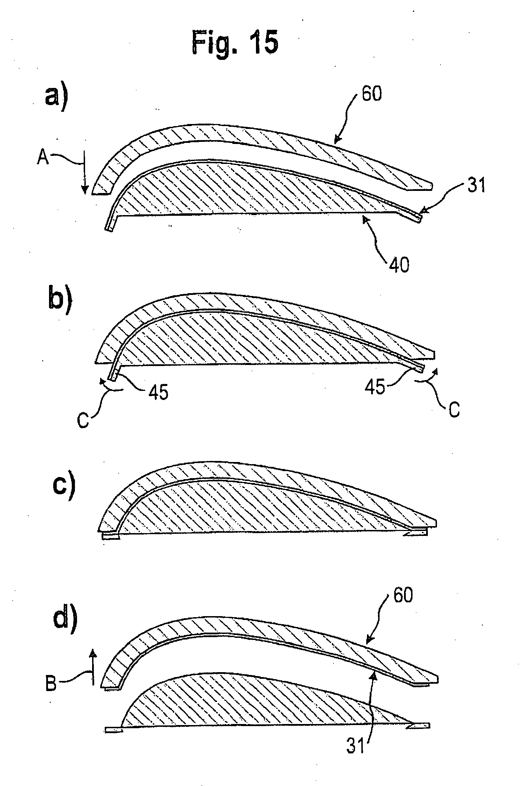

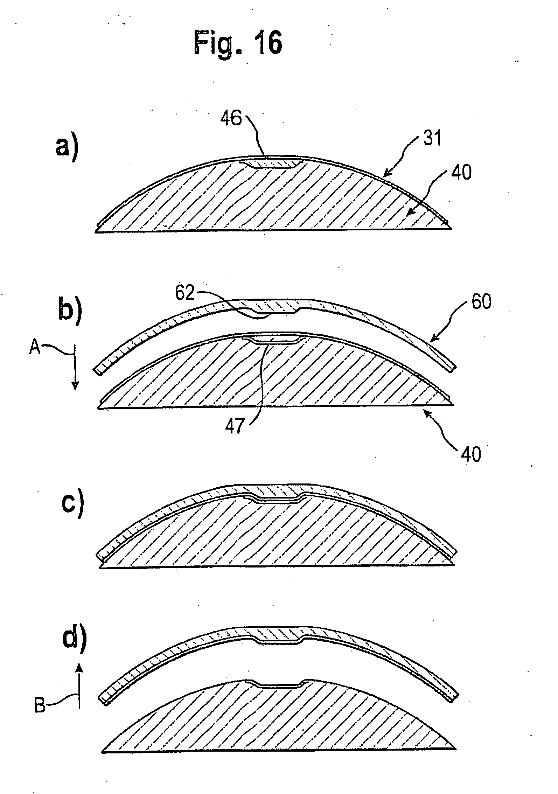

In den Fig. 15 und 16 sind Möglichkeiten des Umformens (Drapierens) des fertig gelegten Vorformlings 31 mittels der Transfervorrichtung 60 gezeigt. In Fig. 15 ist zunächst eine Ausführungsform gezeigt, mit der der Randbereich des Vorformlings 31 drapiert werden kann. Der Werkstückträger 40 weist dazu Drapierrandbereiche 45 auf, die in Richtung der Pfeile C bewegbar sind (siehe Fig. 15b)). Wie aus der Abfolge der Fig. 15a) bis c) ersichtlich ist, wird die Transfervorrichtung 60 auf dem Werkstückträger 40 mit dem fertig gelegten Vorformling 31 abgesenkt. Dann werden die Drapierrandbereiche 45 zum Drapieren des Randes des fertiggelegten Vorformlings 31 bewegt, und dann wird der im Randbereich drapierte Vorformling 31 mit Hilfe der Transfervorrichtung 60 von dem Werkstückträger 40 abgenornmen.

In Fig. 16 ist eine Ausführungsform zum Drapieren eines anderen Bereichs gezeigt. In dem Werkstückträger 40 ist ein Einleger 46 in eine Ausnehmung 47 eingesetzt. Der Vorformling 31 ist auf dem Werkstückträger 40 fertig gelegt (Fig. 16a)), bevor die Transfereinheit 60 auf den Werkstückträger 40 abgesenkt wird. Vor dem Absenken der Transfervorrichtung 60 wird der Einleger 46 entfernt, sodass die Ausnehmung 47 unter dem fertig gelegten Vorformling 31 vorhanden ist. Die Transfervorrichtung 60 weist einen zu der Ausnehmung 47 komplementären Drapiervorsprung 62 auf.

Wie in Fig. 16c) gut zu erkennen ist, wird durch das Zusammenwirken des Drapiervorsprungs 62 und der Ausnehmung 47 der entsprechende Bereich des fertig gelegten Vorformlings 31 drapiert (umgeformt) und dann in der drapierten Form von dem Werkstückträger 40 abgehoben (siehe Fig. 16d)).

Es sind also an der Transfervorrichtung 60 und dem Werkstückträger 40 zusammenwirkende Drapiermittel 45, 46, 47, 62 zum Drapieren des fertig gelegten Vorformlings 31 vorgesehen.

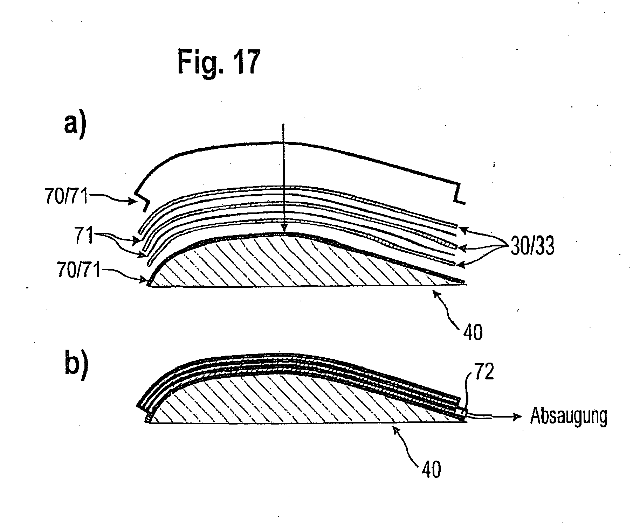

Fig. 17 zeigt, wie eine Verpackung oder Formfixierung des Vorformlings 31 mittels Folien 70 oder Harzfilmen 71 möglich ist. Dazu wird z.B. auf dem Werkstückträger eine Folie 70 oder ein Harzfilm 71 abgelegt, bevor die Faserlagen 30/33 abgelegt werden. Optional können zwischen einigen Faserlagen ebenfalls Harzfilme 71 abgelegt werden. Nach dem Ablegen der letzten Faserlage wird eine Folie 70 oder ein Harzfilm 71 aufgebracht. Die äußeren Folien 70 oder die äußeren Harzfilme 71 werden nun luftdicht miteinander verbunden und dann wird die Luft zwischen den Filmen über einen Ausgang 72 abgesaugt.
Bei dem Verpacken zwischen zwei Harzfilmen 71 und gegebenenfalls dem Vorsehen von Harzfilmen 71 zwischen einigen Faserlagen liegt ein Vorteil darin, dass sich das Harz bereits in Form der Harzfilme im Bauteil Vorfonnling befindet und der Injektionsschritt entfallen kann, obwohl trockene Fasern abgelegt werden und die Fasern nicht während des Ablegens mit Harz oder Kleber versehen werden.

Die Folien und die Harzfilme können dabei vorgefertigte, flächige, zwei- oder dreidimensional geformte thermoplastische und/oder duromere Harzfilme oder thermoplastische und/oder duromere Folien sein. Sie können aber auch mittels Überziehen eines ebenen Harzfilms bzw. Folie über die Faserlagen ähnlich einem Tiefziehprozess oder z.B. durch Aufsprühen von Harz oder eines geeigneten Polymers auf die Faserlagen entstehen. Alternativ zum Einbringen von Harzfilmen können auch Hybridfasern verwendet werden, die neben der Verstärkungsfaser thermoplastische und/oder duromere Polymerfasern beinhalten. Die äußerste oder die äußersten Folien können auch funktionale Folien sein, die z.B. zur Realisierung hoher Oberflächengüten äquivalent zu einem Lack dienen. In einer weiteren Ausführungsform des Aspekts kann ein Vorformling mit oder ohne Harzfilmen auch in einen vorgefertigten Folienbeutel und/oder Schlauchfolienabschnitt platziert werden, dessen offene Kanten anschließend verschlossen werden.

Außerdem ist dieses "Verpacken" vorteilhaft, da durch das Anlegen von Unterdruck die Form des Vorformlings für eine Zwischenlagerung oder den Transport stabilisiert werden kann. Fasern, Harzfilme und Folien bilden eine transpontstabile und gut zu lagernde Einheit, die eine Aushärtung in einer einfachen Heißpressvorrichtung erlauben. Durch die kürzeren Fließwege des Harzes wird die Imprägnierung des Vorformlings verkürzt und damit auch die Werkzeugbelegungszeit. Weiterhin wird der bei Harzinjektionsprozessen auftretende Faserverzug durch Fließvorgänge beim Füllen der Formkavität vermieden. Ein weiterer Vorteil besteht in der einfachen Handhabung derart verpackter trockener Vorformlinge aus Faserlagen und/oder Halbzeuglagen, da diese z.B. mit einfachen Unterdruckgreifern automatisiert gehandhabt werden können.

Weiterhin kann das "Verpacken" des Vorformlings ein nachfolgendes Umformen erleichtern, da z.B. durch die Stärke des eingeschlossenen Vakuums und/oder das Fixieren von Rändern oder Randabschnitten der Verpackung die Drapierfähigkeit des Vorformlings gezielte beeinflusst werden kann.

Das "Verpacken" bzw. die Formfixierung ist bei flächigen Vorformlingen, ob zweidimensional flächig oder dreidimensional flächig, gleichermaßen vorteilhaft, da eine formstabile (=formfixierte) Übertragung oder Lagerung ermöglicht wird. Flächig bedeutet dabei flächenhaft oder flächenartig in dem Sinn, dass im Wesentlichen eine Fläche bildende Bauteile gemeint sind, deren Ausdehnung senkrecht zu ihrer Oberfläche gering ist im Vergleich zu der Ausdehnung entlang ihrer Oberfläche, also z.B. wenigstens 1:4 oder 1:5 oder 1:6 oder 1:7 oder 1:8 oder 1:9 oder 1:10 oder.......oder 1:100 oder 1:101 oder ..... oder 1:200 oder ....etc. Bei Kombination mit Harzfilmen ergeben sich besondere Vorteile durch zusätzliche Reduzierung der Imprägnierzeit. Die äußeren Schichten (Folien bzw. Harzfilme) sind dazu vorteilhafterweise luftdicht ausgebildet, so dass das Anlegen des Unterdrucks, also die Evakuierung des Zwischenraums möglich wird.

Der zu verpackende Vorformling muß dazu, wie bereits die Beschreibung der Verpackung oder Formfixierung des Vorformlings 31 mittels Folien 70 oder Harzfilmen 71 zur Fig. 17 zeigt, nicht zwingend mittels der beschriebenen Vorrichtung hergestellt werden. Die Verwendung von Multiaxialgelegen, Geweben etc. zur Ausbildung des Vorformlings, der wie oben zur Fig. 17 beschrieben verpackt bzw. formfixiert wird, ist genauso möglich.

Nachdem die Vorrichtung und die Bestandteile der Vorrichtung und die Bestandteile der Vorrichtung zum Herstellen von Fasergelegen und Bauteilvorformlingen aus Fasern beschrieben wurden, wird nunmehr ein Verfahren zum Herstellen von solchen Fasergelegen und Bauteilvorformlingen beschrieben.

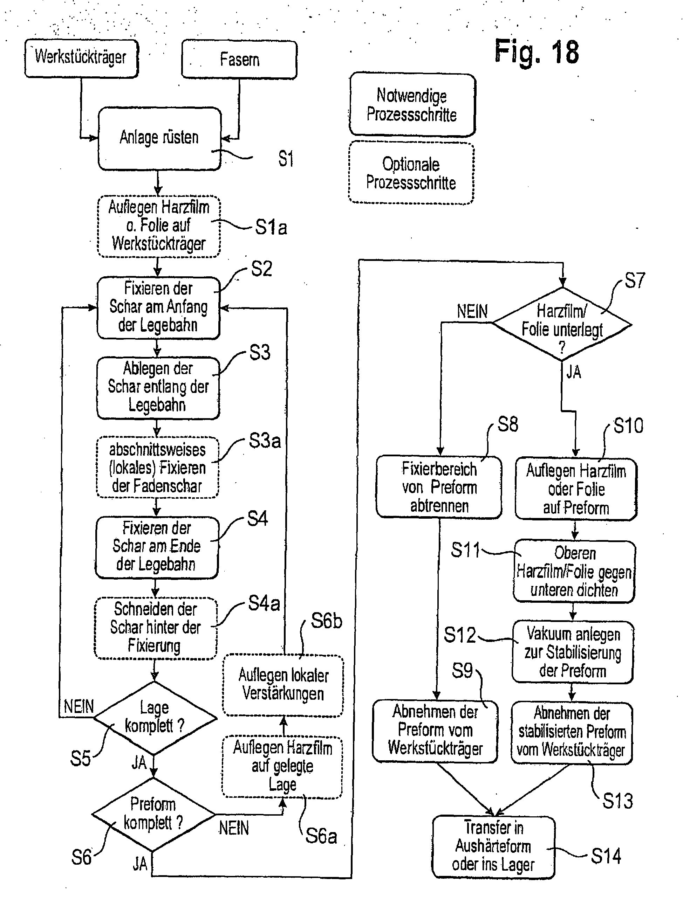

Wie in Fig. 18 gezeigt ist, wird zunächst die Anlage mit den Werkstückträger und den Fasern ausgerüstet (Schritt S1). In Schritt S1a kann ein Harzfilm oder eine Folie auf dem Werkstückträger aufgelegt werden, wie es z.B. unter Bezugnahme auf Fig. 17 beschrieben wurde. Dieser Schritt S1a ist optional.

Dann werden in Schritt S2 die Fasern der Faserschar am Anfang einer Legebahn fixiert. Dies wird in aller Regel im Randfixierbereich des Werksstückträgers geschehen. Der Randbereich kann dabei auch einen Fixierbereich an einem inneren Rand eines Bauteiles bzw. Werkstückträgers bezeichnen, wenn das Bauteil einen größeren, nicht mit Fasern zu belegenden Ausschnitt aufweist, wie z.B. ein Fenster oder Mannloch. Die in Schritt S3 dann abzufahrende Legebahn ist in einem Faserlegemuster vordefiniert. Im optionalen Schritt S3a werden die Fasern zwischenfixiert. Am Ende der Legebahn werden die Fasern der Faserschar im Randfixierungsbereich fixiert (S4).

Die Fasern der Faserschar werden optional hinter der Randfixierung abgeschnitten (Schritt S4a). Ein solcher Vorgang ist beispielhaft in Fig. 8 gezeigt worden.

In Schritt S5 wird geprüft, ob die Lage entsprechend des Legemusters vollständig ist oder nicht. Ist die Lage noch nicht vollständig abgelegt worden, wird zu Schritt S2 gesprungen, in dem die Faserschar am Anfang der nun abzufahrenden Legebahn für die Lage fixiert wird. Falls die Legebahn an derselben Stelle fortzusetzen ist (siehe z.B. Fig. 7, ist diese Fixierung bereits durch Ausführen des vorhergehenden Schrittes S4 ausgeführt worden)

Falls die Bestimmung in Schritt S5 ergibt, dass die Lage vollständig abgelegt wurde, wird in Schritt S6 geprüft, ob der Vorformling vollständig gelegt wurde. Falls nein, wird in Schritt S6a optional ein Harzfilm auf die gelegte Lage aufgelegt (siehe z.B. Fig. 17) und in Schritt S6b werden optional lokale Verstärkungen aufgelegt und dann schreitet der Ablauf zu Schritt S2. Die Schritte S2 bis S6b werden in der beschriebenen Form wiederholt, bis der Vorformling vollständig abgelegt wurde. In diesem Falle gibt die Bestimmung in Schritt S6 JA, so dass der Ablauf zu Schritt S7 fortsclueitet. In Schritt S7 wird geprüft, ob vorhergehend Harzfilme oder Folien unterlegt wurden. Das Auflegen/Aufbringen von einem oder mehreren lokalen Einlegern (z.B. Zuschnitte aus Gewebe oder Gelege, vorgefertigte Gestricke, Bänder) auf den Vorformling oder zwischen die Lagen des Vorformlings in Schritt 6b erfolgt zur Bildung von lokalen Verstärkungen.

Ergibt die Überprüfung in Schritt S7 NEIN, dann werden die Abschnitte der Fasern in dem Randfixierungsbereich von dem Vorformling abgetrennt, z.B. durch Schneiden (Schritt S8). Dadurch erhält der Vorformling die gewünschte Form. Das Abschneiden des Fixierbereichs ist optional. Es auch vorteilhaft sein, den Fixierbereich am Vorformling zu belassen (bessere Preformstabilität. Der Fixierbereich kann z.B. als Quetschkante im Harzinjektionswerkzeug dienen.

Danach wird in Schritt S9 der Vorformling vom Werkstückträger abgenommen. Das kann z.B. erfolgen, wie es in den Fig. 14 bis 16 gezeigt wurde. Nach dem Abnehmen in Schritt S9 wird der abgenommene Vorformling in einer Aushärteform oder in ein Zwischenlager oder zu einem anderen Verarbeitungsschritt transferiert (S 14). Zwischen den Schritten S6 und S8 können optionale Drapierschritte vorgesehen sein.

Falls in Schritt S7 bestimmt wird, dass ein Harzfilm oder eine Folie unterlegt wurde, schreitet das Verfahren zu Schritt S10. In Schritt S10 werden ein Harzfilm oder eine Folie auf den Vorformling, der sich auf dem Werkstückträger befindet, aufgelegt. Dann werden in Schritt S11 die oberen und unteren Harzfilme/Folien gegeneinander gedichtet und in Schritt S12 wird ein Unterdruck zur Stabilisierung des Vorformlings angelegt. Dann wird in Schritt S13 der stabilisierte Vorformling vom Werkstückträger abgenommen und das Verfahren schreitet zudem bereits beschriebenen Schritt S14 fort.

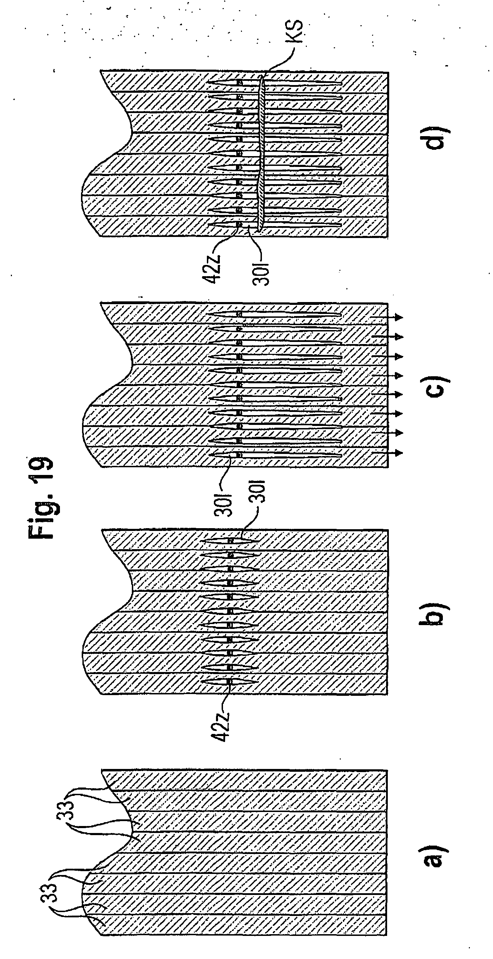

Die beschriebenen Vorrichtungen und Verfahren können unter anderem die folgenden signifikanten Vorteile bieten:
A) Klebstoffauftrag
   Der Klebstoffauftrag ist grundsätzlich optional, d.h. es sind auch andere Fixierungen der Fadenschar am Rand oder zur Zwischenfixierung möglich.
   Zuvor bekannte Harz- und/oder Klebstoffapplikationssysteme dienen eher dazu, die Fasern mit Harz zu tränken, um die ansonsten notwendige, nachgeschaltete Harzinjektion zu vermeiden. Bei der Erfindung können insbesondere auch Klebstoffe mit hoher Viskosität, die eine Fixierung der Fadenschar im Sekundenbereich erlauben, verwendet werden.
   Wenn zur Fixierung der Fadenschar Klebstoff verwendet wird, wird dieser bevorzugt nur im Fixierbereich am Anfang und am Ende der Legebahn aufgebracht. Dies führt zu den Vorteilen dass keine weiteren, eventuell zulassungsrelevanten Stoffe in die Preform eingebracht werden und dass die Imprägnierung mit Harz nicht durch Klebstoff behindert wird.
   Die Vorrichtung und das Verfahren ermöglichen einen Klebstoffauftrag sowohl auf den Werkstückträger bzw. auf bereits auf dem Werkstückträger liegende Fasern als auch einen Auftrag auf die noch am Lesekopf befindlichen und momentan abzulegenden Fasern.
   Beim Fixieren der Faserschar mittels Klebens wird am Anfang und am Ende einer Legebahn eine Klebstoffraupe KS auf die abzulegende Faserschar 30 aufgebracht. Dünnflüssige Klebstoffe durchdringen die Faser (Roving), die aus einer Mehrzahl einzelner Filamente besteht, komplett, so dass alle Filamente sicher fixiert werden. Höher viskose Klebstoffe (Viskosität ≥ 1.500mPas) durchdringen allerdings die Faser nicht komplett, sondern haften hauptsächlich auf der Seite der Faser, auf die die Klebstoffraupe KS aufgebracht wurde. Durch die nicht mit dem Klebstoff fixierten Filamente bildet sich eine Trennschicht aus. Dadurch kann es passieren, dass beim Fixieren einer Faserschar auf die schon abgelegte Schar und die sich beim Ablegen der Schar ergebende Zugkraft längs der Faserschar die Fixierung an der Trennschicht aufreißt. Die untere Faserschar wird sozusagen geteilt. Zur Lösung dieses Problems werden im Bereich der Fixierung Lücken 301 in die Faserschar 30 eingebracht. Dadurch kann der höher viskose Klebstoff die Fasern besser durchdringen und eine Trennschicht wird vermieden.
   Dieses Vorgehen ist in Fig. 19 dargestellt. Fig. 19a) zeigt die ungestörte Faserschar 30. Durch die Schar wird eine Mehrzahl von Körpern gesteckt wie in Fig. 19b) dargestellt ist. Diese Körper können z.B. Nadeln 42z einer Nadelleiste sein. Wenn die Faserschar in der Ablagerichtung ein Stück gezogen wird (siehe die Pfeile in Fig. 19c)), entstehen die Lücken (301 in Fig. 19c)), durch die auch der höher viskose Klebstoff an der Klebstoffraupe KS (Fig. 19d)) auf die Rückseite der Faserschar gelangt und so etwaige Trennstellen verhindert. Die Anordnung der Körper 42z, die die Lücken 301 in der Schar bewirken, kann dabei beliebig sein. Vorteilhaft ist eine gleichmäßige Verteilung über die Breite der Rovingschar.
B) Verwendung verschiedener Faserarten
   Insbesondere aufgrund der Tatsache, dass die Fasern trocken abgelegt werden, ist das Verwenden verschiedener Faserarten in einem Arbeitsgang, d.h. z.B. gemischt in einer Lage oder Ähnliches, möglich. Es könnten z.B. Glasfasern und Kohlenstofffasern mit seinem Kopf gemischt oder nacheinander abgelegt werden. Sollen sie nacheinander abgelegt werden, dann können zwei Faserscharen, z.B. eine Glasfaserschar und eine Kohlenstofffaserschar getrennt in zwei Zuführungsvorrichtungen 52 in den Legekopf transportiert werden, der dann gegebenenfalls über zwei Fördermechanismen verfügt.
C) Variierung der Ablegebreite der Fasernschar
   Es wird ermöglicht, die Breite der abgelegten Faserschar zu variieren, wobei die Breite der einzelnen Fasern (Rovings) der Schar, z.B. durch Aufspreizen oder Einschnüren, Einengen, Verschrnälern eingestellt wird. Dies geschieht im Legekopf, und zwar z.B. durch Variieren der Umlenkradien oder des Grads der Umlenkung.
   Durch das Variieren der Ablegebreite kann das Flächengewicht der Faserschar eingestellt werden.
D) Möglichkeit zur Kombination mit weiteren Vorformlingen
   Durch die Verwendung trockener Fasern zum Aufbau der Vorform besteht die Möglichkeit, die mit dem beschriebenen Verfahren erstellte Vorform mit weiteren Vorformen zu einem komplexeren Gebilde zu ergänzen, wobei die weiteren Vorformlinge mit anderen Preforming-Verfahren wie z.B. Flechten, Sticken oder Faserspritzen gefertigt werden können. Weiterhin besteht die Möglichkeit die mit dem hier beschriebenen Verfahren gefertigte Vorform durch z.B. Nähen zu verstärken.

Es wird ausdrücklich erklärt, dass alle Merkmale die in der Beschreibung und/oder den Ansprüchen offenbart sind, dazu gedacht sind, getrennt und unabhängig voneinander zum Zwecke der ursprünglichen Offenbarung und ebenso zum Zwecke des Beschränkens der beanspruchten Erfindung, unabhängig von der Zusammenstellung der Merkmale in den Ausführungsformen und/oder den Ansprüchen, offenbart zu werden. Es wird ausdrücklich erklärt, dass alle Wertebereiche oder Angaben von Gruppen von Gesamtheiten jeden möglichen Zwischenwert und jede Zwischengesamtheit zum Zwecke der ursprünglichen Offenbarung und ebenso zum Zwecke des Beschränkens der beanspruchten Erfindung offenbaren.

## Patentansprüche

1. Faserführungsvorrichtung zum Führen einer Mehrzahl von durch eine Faserfördervorrichtung zu fördernden Fasern (33) einer Faserschar (30) mit
einem Eingang, in den die zu fördernden Fasern (33) in einer Faservorschubrichtung (V) eingeführt werden,
einem Ausgang, aus dem die zu fördernden Fasern (33) in der Faservorschubrichtung (V) herausgeführt werden, und
einer Faserführungskette (52), die den Eingang mit dem Ausgang verbindet und in der die zu fördernden Fasern (33) in der Faservorschubrichtung (V) über drehbar gelagerte Wellen (52w) oder unabhängig voneinander drehbar gelagerte Rollen (52r) derart geführt werden, dass der Abstand benachbarter Wellen (52w)/Rollen (52r) bei Biegung der Faserführungskette konstant bleibt.

2. Faserführungsvorrichtung nach Anspruch 1, bei der
die Faserführungskette (52) eine Mehrzahl von Kettensegmenten (52s) aufweist, die miteinander zu der Faserführungskette derart verbunden sind, dass benachbarte Segmente sich relativ zueinander um eine Achse (A) drehen können, und die drehbar gelagerten Wellen (52w) oder
die drehbar gelagerte Rollen (52r) jeweils in axialer Richtung der Achsen (A) um diese drehbar angeordnet sind.

3. Faserführungsvorrichtung nach Anspruch 1 oder 2, bei der die Faserführungskette dazu angepasst ist, eine Torsion um die Längsachse der Faserführungskette zuzulassen.

4. Verwendung einer Faserführungsvorrichtung nach einer der Ansprüche 1 bis 3 in der Weise, dass die Fasern (33) der Faserschar (30) in Draufsicht auf die Faserschar in Faservorschubrichtung (V) abwechselnd unter und über den Wellen (52w) bzw. Rollen (52r) geführt werden.

5. Vorrichtung zum Aufbau eines dreidimensionalen Vorformlings (31) für ein Bauteil aus einem Faserverbundwerkstoff, mit
einem Werkstückträger (40) mit einer zu der dreidimensionalen Gestalt des Vorformlings (31) passenden Form,
einem Legekopf (20) zum gleichzeitigen Ablegen einer Faserschar (30) mit einer Mehrzahl von trockenen Fasern (33) auf dem Werkstückträger (40),
einer Faserführungsvorrichtung nach einem der Ansprüche 1 bis 3,
einer Randfixiervorrichtung zum Fixieren der Fasern (33) am Rand (42) des Werkstückträgers (40),
einer Faserschneidevorrichtung (21) zum Abschneiden der Fasern, und
einer Transfervorrichtung zum Übertragen des dreidimensionalen Vorformlings (31) von dem Werkstückträger (40) zu einem nächsten Herstellungsschritt,
bei der der Legekopf (20) mit dem Ausgang der Faserführungsvorrichtung (52) verbunden ist und die Faserschar (30) über diese Faserführungsvorrichtung zugeführt wird.

## Claims

1. A fibre-guiding device for guiding fibres (33) of a fibre set (30) to be conveyed by a fibre conveying device, comprising
an inlet, into which the fibres (33) to be conveyed are introduced in a fibre-supply direction (V), an outlet, out of which the fibres (33) to be conveyed are guided out in the fibre-supply direction (V), and
a fibre-guiding chain (52) moveably connecting the inlet with the outlet, in which the fibres (33) to be conveyed are guided in the fibre-supply direction (V) via rotatably supported shafts (52w) or rollers (52r), which are independently rotatably supported, such that the distance of adjacent shafts (52w)/rollers (52r) is kept constant in case of bending the fibre-guiding chain.

2. The fibre-guiding device according to claim 1, wherein
the fibre-guiding chain (52) comprises a plurality of chain segments (52s), which are connected to each other into the fibre-guiding chain such that adjacent segments are rotatable relative to each other around an axis (A) and the rotatable supported shafts (52w) or the rotatably supported rollers are each arranged in the axial direction of the axes (A) and rotatably around the same.

3. The fibre-guiding device according to claim 1 or 2, wherein the fibre-guiding chain is adapted to allow a torsion around its longitudinal axis.

4. A use of a fibre-guiding device according to one of claims 1 to 3 in such a manner that the fibres (33) of the fibre set (30) are guided in the fibre-supply direction of (V) alternatingly below and above the shafts (52w) and rollers (52r), respectively, in a top view of the fibre set.

5. Apparatus for building-up a three-dimensional preform (31) for a structure member of a fibre composite material, comprising
a workpiece carrier (40) with a form corresponding to the three-dimensional shape of the preform (31),
a laying head (20) for simultaneous laying of a fibre set (30) with a plurality of dry fibres (33) on the workpiece carrier (40),
a fibre-guiding device according to one of claims 1 to 3,
an edge-fixing device for fixing the fibres at the edge (42) of the workpiece carrier (40),
a fibre cutting device (21) for cutting the fibres, and
a transfer device for transferring the three-dimensional preform (31) from the workpiece carrier (40) to a next manufacturing step,
wherein the laying head (20) is connected with the outlet of the fibre-guiding device (52), and the fibre set (30) is supplied via this fibre-guiding device.

## Revendications

1. Dispositif de guidage de fibres servant à guider une pluralité de fibres (33) d'un faisceau (30) de fibres à transporter par un dispositif de transport de fibres, comprenant
une entrée dans laquelle les fibres (33) à transporter sont introduites dans une direction d'avance (V) de fibres,
une sortie de laquelle les fibres (33) à transporter sont sorties dans la direction d'avance (V) de fibres, et
une chaîne de guidage (52) de fibres qui relie l'entrée à la sortie et dans laquelle les fibres (33) à transporter dans la direction d'avance (V) de fibres sont guidées par l'intermédiaire d'arbres (52w) montés à rotation ou de rouleaux (52r) montés à rotation indépendamment les uns des autres de telle manière que la distance d'arbres (52w) / de rouleaux (52r) voisins reste constante lorsque la chaîne de guidage de fibres fléchit.

2. Dispositif de guidage de fibres selon la revendication 1, dans lequel la chaîne de guidage (52) de fibres présente une pluralité de segments (52s) de chaîne qui sont reliés les uns aux autres pour former la chaîne de guidage de fibres de telle manière que des segments voisins puissent tourner les uns par rapport aux autres autour d'un axe (A), et les arbres (52w) montés à rotation ou les rouleaux (52r) montés à rotation sont respectivement disposés dans la direction axiale des axes (A) de manière à pouvoir tourner autour de ceux-ci.

3. Dispositif de guidage de fibres selon la revendication 1 ou 2, dans lequel la chaîne de guidage de fibres est adaptée pour permettre une torsion autour de l'axe longitudinal de la chaîne de guidage de fibres.

4. Utilisation du dispositif de guidage de fibres selon l'une des revendications 1 à 3 de manière que les fibres (33) du faisceau (30) de fibres soient guidées en alternance en dessous et au-dessus des arbres (52w) ou des rouleaux (52r) dans la direction d'avance (V) de fibres dans une vue de dessus du faisceau de fibres.

5. Dispositif pour construire une préforme tridimensionnelle (31) pour un élément constitué d'un matériau composite renforcé par des fibres, comportant
un porte-pièces (40) équipé d'un moule s'adaptant à la forme tridimensionnelle de la préforme (31),
une tête de pose (20) servant à déposer de manière simultanée un faisceau (30) de fibres comprenant une pluralité de fibres (33) sèches sur le porte-pièces (40),
un dispositif de guidage de fibres selon l'une des revendications 1 à 3, un dispositif de fixation de bord servant à fixer les fibres (33) sur le bord (42) du porte-pièces (40),
un dispositif de coupe (21) de fibres servant à couper les fibres, et
un dispositif de transfert servant à transférer la préforme tridimensionnelle (31) du porte-pièces (40) vers une étape de fabrication suivante,
dans lequel la tête de pose (20) est reliée à la sortie du dispositif de guidage (52) de fibres et le faisceau (30) de fibres est amené par l'intermédiaire de ce dispositif de guidage de fibres.
